# EUROPEAN PATENT SPECIFICATION

(11) **EP 2 851 516 B1**
(45) Date of publication and mention of the grant of the patent: **18.03.2020**
(21) Application number: 14185004.0
(22) Date of filing: 16.09.2014
(51) Int. Cl.: F01D 9/00, F02K 1/38, F02K 1/48, F01D 9/04

(54) **Integrated turbine engine exhaust struts and mixer of turbofan engine**
Integriertes Turbinenaustrittsgehäuse und Mischer eines Mantelstromtriebwerks
Bras de sortie turbine et mélangeur intégrés de turboréacteur à double flux

(30) Priority: 19.09.2013 US 201361879723 P; 26.05.2014 US 201414287125
(43) Date of publication of application: 25.03.2015
(73) Proprietor: Pratt & Whitney Canada Corp., Longueuil, Québec J4G 1A1 (CA)
(72) Inventor: CUNNINGHAM, Mark Huzzard, Montreal, Québec H4B 2G2 (CA); VLASIC, Edward Parker, Baie-d'Urfe, Québec H9X 2P4 (CA); GIRGIS, Sami, Hawkesbury, Ontario K6A 3A4 (CA)
(74) Representative: Dehns

(56) References cited:
- CA-A1- 2 704 366
- DE-A1-102010 044 483
- US-A- 4 045 957
- US-A1- 2006 010 852
- US-A1- 2010 031 631

## Description

### TECHNICAL FIELD

The application relates generally to turbofan aero-engines and, more particularly to an improved turbine exhaust case including a mixer for such engines.

### BACKGROUND OF THE ART

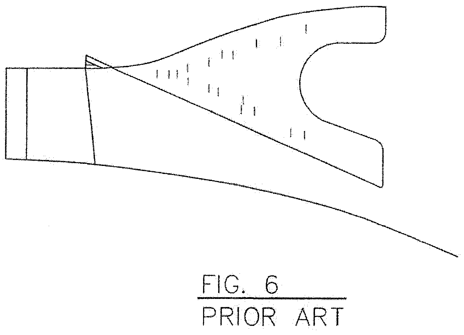

In order to increase the effective thrust of turbojet engines, bladed fans have been added to a turbine driven shaft thereof to affect the flow of a quantity of atmospheric air through an annular bypass duct surrounding the turbojet. Hot gases exhausted from the engine core and the bypass airstream are mixed together before expulsion through a single nozzle. In order to perform the mixing function, mixers have been attached to the downstream end of a shroud of the turbine exhaust case (TEC). A swirling flow of exhaust gases from the turbine exit is conventionally deswirled by a plurality of deswirling struts located within the TEC, upstream of the mixer as shown in FIG. 6, such that the exhausted gases are substantially deswirled prior to entering the mixer in order to maximize the performance of the struts and mixer individually and to promote efficient mixing with minimum pressure losses. Nevertheless, there is room for improvement of such a conventional configuration of deswirling struts and mixer.

Accordingly there is a need to provide an improved mixer.

A turbine exhaust case (TEC) having the features of the preamble of claim 1 is disclosed in DE 10 2010 044483 A1. A further TEC is disclosed in US 2010/031631 A1.

### SUMMARY

According to the invention, there is provided a turbine exhaust case (TEC) of a turbofan aeroengine, as set forth in claim 1.

Further details of these and other aspects of the described subject matter will be apparent from the detailed description and drawings included below.

### DESCRIPTION OF THE DRAWINGS

Reference is now made to the accompanying figures in which:
FIG. 1 is a schematic side cross-sectional view of an examplary turbofan aeroengine showing an application of the described subject matter according to one embodiment;
FIG. 2 is a perspective view of a turbine exhaust case mixer according to one embodiment which may be used in the engine of FIG. 1;
FIG. 3 is a partial cross-sectional view of the engine of FIG. 1, showing another embodiment of the mixer integrated with deswirling struts in an enlarged scale;
FIG. 4 is a perspective view of the mixer incorporated with the deswirling strut of FIG. 3, with the deswirling strut partially cut away to show a cross-section thereof;
FIG. 5 is a cross-sectional view of the deswirling strut to show the cross-section of the deswirling strut in FIG. 4 having an aerofoil profile; and
FIG. 6 is a partial cross-sectional view of a turbine exhaust case mixer conventionally attached to the turbine exhaust case downstream of deswirling struts installed within the turbine exhaust case.

It will be noted that throughout the appended drawings, like features are identified by like reference numerals.

### DETAILED DESCRIPTION

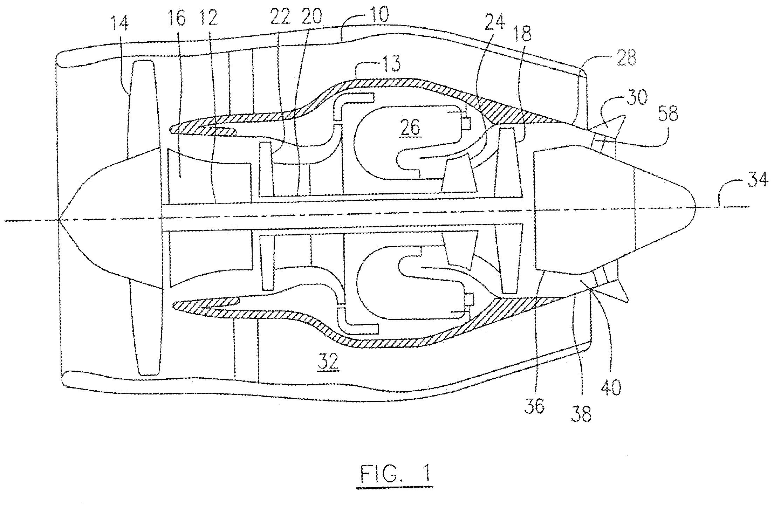

FIG. 1 illustrates an exemplary turbofan aeroengine which includes a nacelle configuration 10, a core casing 13, a low pressure spool assembly seen generally at 12 which includes a fan assembly 14, a low pressure compressor assembly 16 and a low pressure turbine assembly 18, and a high pressure spool assembly seen generally at 20 which includes a high pressure compressor assembly 22 and a high pressure turbine assembly 24. The core casing 13 surrounds the low and high pressure spool assemblies 12 and 20 in order to define a main fluid path (not numbered) therethrough. In the main fluid path there is provided a combustion chamber 26 in which a combustion process produces combustion gases to power the high and low turbine pressure assemblies 24 and 18. A turbine exhaust case (TEC) 28 is provided to form a downstream end of the core casing 13 and a mixer 30 is attached to the downstream end of the TEC 28 for mixing hot exhaust gases discharged from the high and low pressure turbine assemblies 24, 18 through the main fluid path, with a bypass airstream driven by the fan assembly 14 through an annular bypass duct 32 which is defined radially between the nacelle configuration 10 and the core casing 13.

Referring to FIGS. 1-3, the TEC 28 and the mixer 30 define a common central axis 34 which substantially superposes a central rotation axis of the aeroengine. The TEC 28 includes an annular hub 36 and an annular shroud 38 with the annular mixer 30 attached to a downstream end of the shroud 38. The shroud 38 and the mixer 30 surround the hub 36 to form an annular exhaust gas duct 40 disposed radially therebetween.

It should be noted that the terms "upstream" and "downstream" used herein and hereinafter refer to the direction of a fluid flow passing through the main fluid path of the engine. It should also be noted that the terms "axial", "radial" and "circumferential" are used with respect to the central axis 34.

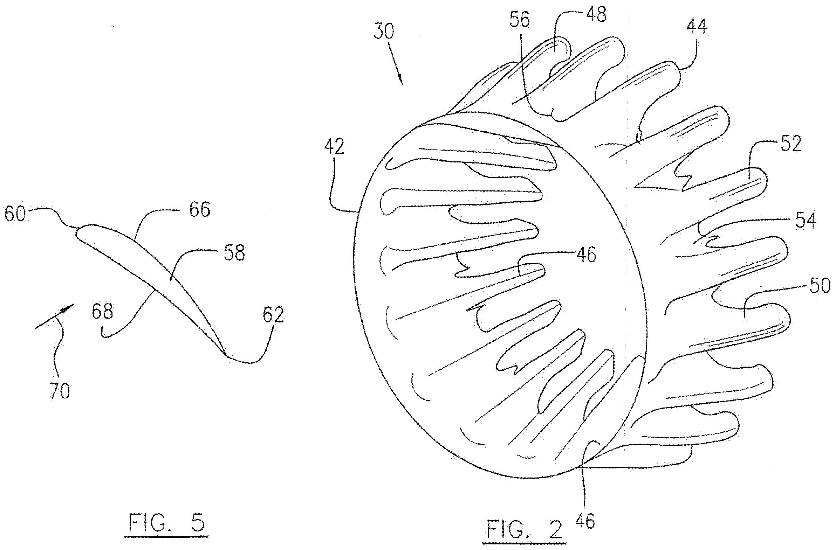

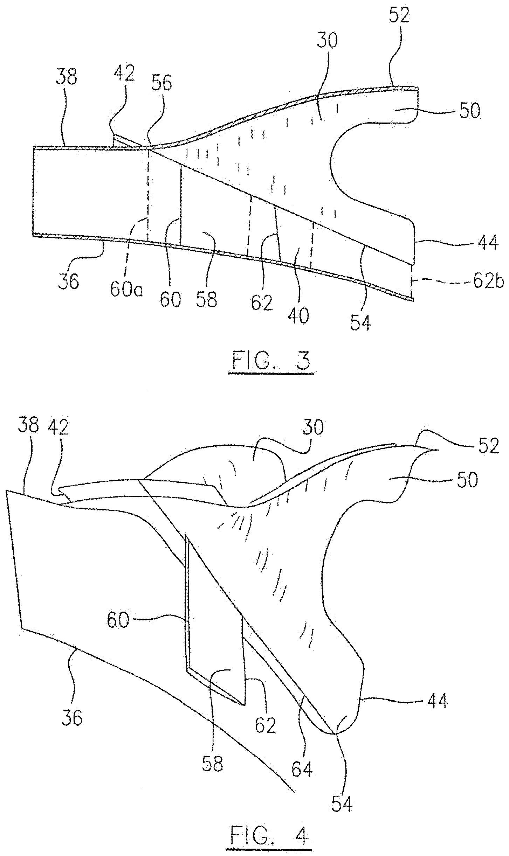

The mixer 30 according to one embodiment such as shown in FIG. 2, defines an annular wavy configuration around the central axis 34 and may axially extend between an upstream end 42 and a downstream end 44 thereof. The mixer 30 may include inner and outer circumferential flow surfaces 46, 48 extending between the upstream and downstream ends 42, 44 of the mixer 30. The inner and outer flow surfaces 46, 48 may be in a circumferentially wavy or twisted annular configuration to thereby form a plurality of lobes 50 of the mixer 30. The lobes 50 may be axially extending or axially straight and define a plurality of alternating crests 52 and valleys 54. In a cross-sectional view as shown in FIG. 3, adjacent crest 52 and valley 54 extend from an axial start point 56 which is close to the upstream end 42 (more clearly shown in FIG. 3) and diverging to the downstream end 44 of the mixer 30.

The inner surface 46 may define inner passageways (not numbered) axially and radially-outwardly along the respective crests 52 for directing the exhaust gases flowing through the annular exhaust gas duct 40. The outer flow surface 48 may define external passageways (not numbered) axially and radially-inwardly along the respective valleys 54 for directing the bypass airstream coming through the annular bypass air duct 32 to flow through the mixer 30. Therefore, the internal and external passageways of the mixer 30 may in combination establish a vortex system downstream of the mixer 30 to encourage mixing between the bypass airstream and the turbine exhaust gases during operation of the aeroengine.

Referring to FIGS. 1 and 3-5, the mixer 30 according to one embodiment may include a plurality of deswirling struts 58 circumferentially spaced apart with respect to the central axis 34. The deswirling struts 58 may be disposed within an axial length of the mixer 30, between the upstream end 42 and the downstream end 44 of the mixer 30. The deswirling struts 58 extend radially across the annular exhaust gas duct 40 and interconnect the mixer 30 and the hub 36 of the TEC 28.

The deswirling struts 58 each include a leading edge 60 and a trailing edge 62. The trailing edge 62 of each deswirling strut 58 circumferentially align with a bottom of the valley 54 such as a bottom line 64 (see FIG. 4) which is a center line of the valley 54. The deswirling struts 58 according to one embodiment and in accordance with the invention are axially located in a middle area of the mixer 30 such that the leading edges 60 of the respective deswirling struts 58 are axially spaced away from the start point 56 of the divergently extending crests 52 and valleys 54 and such that the trailing edges 62 of the respective deswirling struts 58 are axially spaced away from a downstream end of the respective valleys 54 of the mixer 30. The downstream end of the respective valleys 54 according to this embodiment are the downstream end 44 of the mixer 30 because the crests 52 and valleys 54 have a substantially equal axial length as shown in FIG. 3. However, if the axial length of the valleys 54 is less than the axial length of the crests 52, such as illustrated in the embodiment shown in FIG. 2, the downstream end of the valleys 54 will not be the downstream end of the mixer 30.

Optionally, the deswirling struts 58 may each have a cambered profile, for example including a convex side 66 and a concave side 68 extending between the leading and trailing edges 60 and 62 as shown in the cross-sectional view of the deswirling strut 58 in FIG. 5. The struts 58 are cambered in the direction of an incoming swirling flow of the exhaust gases, as indicated by arrow 70 in FIG. 5.

According to one embodiment the deswirling of the swirling flow 70 of the exhaust gases discharged from the low pressure turbine assembly 38 and passing through the annular exhaust gas duct 40, may be accomplished within the mixer 30 by both the deswirling struts 58 and the mixer lobes 50. The swirling flow 70 of exhaust gases passing through the annular exhaust gas duct 40 near the hub 36 may be deswirled by the deswirling struts 58. The swirling flow 70 of the exhaust gases passing through the annular exhaust gas duct 40 near the shroud 38 may be deswirled by the lobes 50 of the mixer 30. With the configuration as described in the above embodiments, the deswirling and mixing functions may be accomplished within a much shorter axial length of the TEC and mixer in contrast to conventional TEC and mixer configurations, thereby advantageously saving engine and nacelle weight. The configuration of the above-described embodiments, can deswirl the swirling flow of exhaust gases and mix the exhaust gases with the bypass air stream with a performance equivalent to or better than that of conventional separate mixer and TEC struts.

The size, shape and position of the deswirling struts may be optimized based on the application and are dependent on the flow conditions including the residual swirl condition from the low pressure turbine assembly 18. The deswirling struts according to the described embodiments may be incorporated into any conventional TEC mixer when the swirl in the exhausted gases is required to be removed. For example, some of the described embodiments may be applicable to TEC mixers in which the axial length of the valleys of the mixers are longer than the axial length of the crests of the mixers.

Alternatively, and also in accordance with the invention, the deswirling struts 58 may be axially located within the mixer 30 such that the leading edge 60 of each of the deswirling struts 58 axially aligns with the start point 56 of the divergently extending crests 52 and valleys 54, as shown by broken line 60a in FIG. 3.

Optionally, each of the valleys 54 of the mixer 30 may be connected with one of the deswirling struts. Also optionally, every second one of the valleys 54 of the mixer 30 may be connected with one of the deswirling struts. Furthermore, the deswirling struts may be circumferentially located at other intervals of the valleys 54 of the mixer 30.

The above description is meant to be exemplary only, and one skilled in the art will recognize that changes may be made to the embodiments described without departing from the scope of the described subject matter.

## Claims

1. A turbine exhaust case (TEC) (28) of a turbofan aeroengine including a mixer (30) for mixing exhaust gases with a bypass air stream, the TEC (28) comprising an annular hub (36) and an annular shroud (38) with said mixer (30) located at a downstream end of the shroud (38), the mixer (30) surrounding the hub (36) to form an annular exhaust gas duct (40) positioned radially therebetween, the mixer (30) comprising an annular wavy configuration to form a plurality of axially extending lobes (50) of the mixer (30), the lobes (50) defining alternating crests (52) and valleys (54) extending divergently to the downstream end of the mixer (30), a plurality of deswirling struts (58) circumferentially spaced apart with respect to a central axis (34) of the TEC (28) the deswirling struts (58) extending radially across the annular exhaust gas duct (40) and interconnecting the mixer (30) and the hub (36); wherein the deswirling struts (58) are located within an axial length of the mixer (30) between an upstream end (42) where exhaust gases enter the mixer (30) and a downstream end (44) of the mixer (30) where exhaust gases are discharged from the mixer (30) and mixes with the bypass air stream; and **characterised in that**:
the deswirling struts (58) each include a leading edge (60) and a trailing edge (62), the trailing edge (62) being axially spaced away from a downstream end of the respective valleys (54) of the mixer (30);
the trailing edge (62) of the respective deswirling struts (58) circumferentially aligns with a bottom of one of the valleys (54); and
the leading edge (60a) of each of the deswirling struts (58) axially aligns with a start point (56) of the divergently extending crests (52) and valleys (54) or the leading edge (60) of the respective deswirling struts (58) is axially spaced away from the start point (56) of the divergently extending crests (52) and valleys (54).

2. The TEC as defined in claim 1 wherein the deswirling struts (58) each have a cambered profile.

3. The TEC as defined in claim 1 or 2 wherein each of the valleys (54) of the mixer (30) is connected with corresponding one of the deswirling struts (58).

4. The TEC as defined in any preceding claim wherein every second one of the valleys (54) of the mixer (30) is connected with corresponding one of the deswirling struts (58).

5. A turbofan aeroengine comprising a turbine exhaust case (TEC) (28) as defined in claim 1, positioned downstream of a turbine section (18) for directing a flow of gases exhausted from the turbine section (18), the crests (52) defining internal axial and radially-outward passages for directing gases exiting from the turbine section (18) to pass through the TEC (28), and the valleys (54) defining external axial and radially-inward passages for directing a bypass air stream to pass along an external surface of the TEC (28), resulting in mixing of the gases with the bypass air stream, the deswirling struts (58) being located within an axial length of the wavy configuration for deswirling a rotational component of the gases passing through the TEC (28).

6. The turbofan aeroengine as claimed in claim 5, wherein the flow of exhaust gases has a swirl direction, incoming to the TEC, the deswirling struts (58) each being cambered in a direction of the incoming swirling flow of the exhaust gases.

## Patentansprüche

1. Turbinenaustrittsgehäuse (turbine exhaust case - TEC) (28) eines Mantelstromluftfahrttriebwerks, das einen Mischer (30) beinhaltet, um Abgase mit einem Umgehungsluftstrom zu mischen, wobei das TEC (28) eine ringförmige Nabe (36) und eine ringförmige Verkleidung (38) umfasst, wobei sich der Mischer (30) an einem stromabwärtigen Ende der Verkleidung (38) befindet, wobei der Mischer (30) die Nabe (36) umgibt, um einen ringförmigen Abgaskanal (40) zu bilden, der radial dazwischen positioniert ist, wobei der Mischer (30) eine ringförmige Wellenkonfiguration umfasst, um eine Vielzahl von sich axial erstreckenden Lappen (50) des Mischers (30) zu bilden, wobei die Lappen (50) alternierende Kämme (52) und Täler (54) definieren, die sich divergierend zu dem stromabwärtigen Ende des Mischers (30) erstrecken, wobei eine Vielzahl von Entwirbelungsstreben (58) umlaufend in Bezug auf eine zentrale Achse (34) des TEC (28) beabstandet ist, wobei sich die Entwirbelungsstreben (58) radial quer durch den ringförmigen Abgaskanal (40) erstrecken und den Mischer (30) und die Nabe (36) miteinander verbinden; wobei sich die Entwirbelungsstreben (58) innerhalb einer axialen Länge des Mischers (30) zwischen einem stromaufwärtigen Ende (42), an dem Abgase in den Mischer (30) eintreten, und einem stromabwärtigen Ende (44) des Mischers (30) befinden, an dem Abgase aus dem Mischer (30) ausgestoßen werden und sich mit dem Umgehungsluftstrom vermischen; und **dadurch gekennzeichnet, dass**:
die Entwirbelungsstreben (58) jeweils eine Vorderkante (60) und eine Hinterkante (62) beinhalten, wobei die Hinterkante (62) axial weg von einem stromabwärtigen Ende der jeweiligen Täler (54) des Mischers (30) beabstandet ist;
die Hinterkante (62) der jeweiligen Entwirbelungsstreben (58) umlaufend auf einen Boden von einem der Täler (54) ausgerichtet ist; und
die Vorderkante (60a) von jeder der Entwirbelungsstreben (58) axial auf einen Startpunkt (56) der sich divergierend erstreckenden Kämme (52) und Täler (54) ausgerichtet ist oder die Vorderkante (60) der jeweiligen Entwirbelungsstreben (58) axial weg aus dem Startpunkt (56) der sich divergierend erstreckenden Kämme (52) und Täler (54) beabstandet ist.

2. TEC nach Anspruch 1, wobei die Entwirbelungsstreben (58) jeweils ein gewölbtes Profil aufweisen.

3. TEC nach Anspruch 1 oder 2, wobei jedes der Täler (54) des Mischers (30) mit einer entsprechenden der Entwirbelungsstreben (58) verbunden ist.

4. TEC nach einem vorhergehenden Anspruch, wobei jede Sekunde eines der Täler (54) des Mischers (30) mit einer entsprechenden der Entwirbelungsstreben (58) verbunden wird.

5. Mantelstromluftfahrttriebwerk, umfassend ein Turbinenaustrittsgehäuse (TEC) (28) nach Anspruch 1, das stromabwärts eines Turbinenabschnittes (18) positioniert ist, um einen Strom an Gasen, der aus dem Turbinenabschnitt (18) austritt, zu lenken, wobei die Kämme (52) innere axiale und radial nach außen gehende Durchlässe definieren, um Gase, die den Turbinenabschnitt (18) verlassen, zu lenken, sodass sie das TEC (28) durchlaufen, und die Täler (54) externe axiale und radial nach innen gehende Durchlässe definieren, um einen Umgehungsluftstrom zu lenken, sodass er entlang einer Außenfläche des TEC (28) verläuft, was zu einer Vermischung der Gase mit dem Umgehungsluftstrom führt, wobei sich die Entwirbelungsstreben (58) innerhalb einer axialen Länge der Wellenkonfiguration befinden, um eine Drehkomponente der Gase zu entwirbeln, die das TEC (28) durchlaufen.

6. Mantelstromluftfahrttriebwerk nach Anspruch 5, wobei der Strom an Abgasen eine Wirbelrichtung aufweist, die in das TEC eingeht, wobei die Entwirbelungsstreben (58) jeweils in einer Richtung des eingehenden Wirbelstroms der Abgase gewölbt sind.

## Revendications

1. Carter de sortie turbine (TEC) (28) d'un turboréacteur d'aéronef à double flux comportant un mélangeur (30) pour mélanger les gaz d'échappement avec un courant d'air de dérivation, le TEC (28) comprenant un moyeu annulaire (36) et un carénage annulaire (38) avec ledit mélangeur (30) situé à une extrémité aval du carénage (38), le mélangeur (30) entourant le moyeu (36) pour former un conduit de gaz d'échappement annulaire (40) positionné radialement entre eux, le mélangeur (30) comprenant une configuration ondulée annulaire pour former une pluralité de lobes (50) du mélangeur (30) s'étendant axialement, les lobes (50) définissant des crêtes (52) et des creux (54) disposés en alternance s'étendant de manière divergente jusqu'à l'extrémité aval du mélangeur (30), une pluralité de bras de redressement (58) espacés de manière circonférentielle par rapport à un axe central (34) du TEC (28), les bras de redressement (58) s'étendant radialement à travers le conduit de gaz d'échappement annulaire (40) et reliant le mélangeur (30) et le moyeu (36) ; dans lequel les bras de redressement (58) sont situés dans une longueur axiale du mélangeur (30) entre une extrémité amont (42) où les gaz d'échappement pénètrent dans le mélangeur (30) et une extrémité aval (44) du mélangeur (30) où les gaz d'échappement sont évacués du mélangeur (30) et se mélangent au courant d'air de dérivation ; et **caractérisé en ce que** :
les bras de redressement (58) comportent chacun un bord d'attaque (60) et un bord de fuite (62), le bord de fuite (62) étant espacé axialement d'une extrémité aval des creux respectifs (54) du mélangeur (30) ;
le bord de fuite (62) des bras de redressement respectifs (58) s'aligne de manière circonférentielle avec le fond d'un des creux (54) ; et
le bord d'attaque (60a) de chacun des bras de redressement (58) s'aligne axialement avec un point de départ (56) des crêtes (52) et des creux (54) s'étendant de manière divergente ou le bord d'attaque (60) des bras de redressement respectifs (58) est espacé axialement du point de départ (56) des crêtes (52) et des creux (54) s'étendant de manière divergente.

2. TEC selon la revendication 1, dans lequel les bras de redressement (58) ont chacun un profil arqué.

3. TEC selon la revendication 1 ou 2, dans lequel chacun des creux (54) du mélangeur (30) est relié à l'un des bras de redressement (58) correspondant.

4. TEC selon une quelconque revendication précédente, dans lequel chaque second creux parmi les creux (54) du mélangeur (30) est relié à l'un des bras de redressement (58) correspondant.

5. Turboréacteur d'aéronef à double flux comprenant un carter de sortie turbine (TEC) (28) selon la revendication 1, positionné en aval d'une section de turbine (18) pour diriger un écoulement des gaz évacués de la section de turbine (18), les crêtes (52) définissant des passages internes axiaux et radialement vers l'extérieur pour diriger les gaz sortant de la section de turbine (18) afin qu'ils traversent le TEC (28), et les creux (54) définissant des passages externes axiaux et radialement vers l'intérieur pour diriger un courant d'air de dérivation afin qu'il traverse une surface externe du TEC (28), résultant en un mélange des gaz avec le courant d'air de dérivation, les bras de redressement (58) étant situés dans une longueur axiale de la configuration ondulée afin de redresser une composante rotative des gaz traversant le TEC (28).

6. Turboréacteur d'aéronef à double flux selon la revendication 5, dans lequel l'écoulement des gaz d'échappement a une direction de tourbillonnement, entrant dans le TEC, les bras de redressement (58) étant chacun arqué dans une direction de l'écoulement tourbillonnant entrant des gaz d'échappement.
